# EUROPEAN PATENT SPECIFICATION

(11) **EP 0 663 992 B1**
(45) Date of publication and mention of the grant of the patent: **14.05.1997**
(21) Application number: 93923386.2
(22) Date of filing: 13.10.1993
(51) Int. Cl.: F25B 41/06, F16K 3/26

(54) **EXPANSION VALVE FOR AIR CONDITIONING SYSTEM**
EXPANSIONSVENTIL FÜR KLIMAANLAGE
SOUPAPE DE DETENTE POUR SYSTEME DE CONDITIONNEMENT D'AIR

(30) Priority: 15.10.1992 US 961563; 07.10.1993 US 133594
(43) Date of publication of application: 26.07.1995
(73) Proprietor: PARKER HANNIFIN CORPORATION, Cleveland Ohio 44112 (US)
(72) Inventor: CAMPBELL, Chester, D., Rancho Santa Margarita, CA 92688 (US); HARPER, Sandra, L., Dana Point, CA 92629 (US); JAIN, Virender, Lake Forest, CA 92630 (US); KENYON, Richard, L., Irvine, CA 92715 (US); MATTHIES, Alan, Milwaukee, WI 53216 (US); RIEFLER, Roger, G., Brandon, MS 39042 (US); YABUKI, Roy, M., Los Angeles, CA 90029 (US); ZOPEY, Ashok, Anaheim Hills, CA 92807 (US)
(74) Representative: Purvis, William Michael Cameron
(86) International application number: US9309773
(87) International publication number: WO9409329

(56) References cited:
- EP-A- 0 147 357
- EP-A- 0 538 926
- US-A- 4 548 047
- US-A- 4 896 860

## Description

This invention relates to a valve.

Such a valve can be used in a heat transfer system as an expansion valve for example in a vehicle air conditioning system.

Heat transfer systems, such as air conditioning systems and heat pump systems, are well known in the prior art. In such systems a working fluid which can be any one of a number of refrigerant materials is used to transfer heat from one region to another.

The working fluid typically passes through a system that includes an evaporator, a compressor, a condenser and an expansion device. of course the system may also include other components such as an accumulator or a receiver/dryer.

In an air conditioning application the evaporator is positioned in the space to be cooled and the condenser is positioned in the area to which heat removed from the cooled space is transferred. Working fluid in the vapor state is pumped by the compressor into the condenser. In the condenser the working fluid rejects heat and condenses to a liquid.

The liquid working fluid passes from the outlet of the condenser into an expansion device. Expansion devices known in the prior art include fixed orifices, capillary tubes and expansion valves.

From the expansion device the working fluid flows to the evaporator wherein it absorbs heat and undergoes a change of phase from liquid to vapor. The refrigerant vapor then flows back to the compressor to begin another pass through the system.

The expansion device is an important element of the system. The amount of working fluid that passes through the expansion device is a controlling factor in the amount of cooling that can be achieved. However, because the temperature of both the space being cooled and the space to which heat is transferred often vary, the pressure and temperature of the liquid working fluid entering the expansion device also varies. This impacts the cooling capabilities of the system and affects the flow rate that must be attained through the expansion device to achieve the optimum cooling effect. In mobile systems such as those used as air conditioning or refrigeration systems on vehicles, the properties of the working fluid delivered to the expansion device can vary widely.

Due to the variable operating conditions of vehicle heat transfer systems, fixed opening expansion devices such as orifices and capillary tubes are sometimes used to reduce cost but are not preferred. Expansion valves that provide variable refrigerant flow rates are more desirable.

Prior art expansion valves have traditionally controlled flow by passing the fluid through an internal opening in the valve and employing a movable restricting body or other element in close proximity to the opening. Moving the restricting body closer to the opening reduces flow. Conversely, moving the restricting body away from the opening increases flow through the valve.

In prior art expansion valves the position of the restricting body has been controlled by an actuator. A common actuator is a diaphragm type which is mounted on the valve. The actuator opens or closes flow through the expansion valve in response to fluid pressure both inside the valve and from a control source. The control source for fluid pressure for positioning the restricting body is delivered from a sealed bulb which holds a carefully determined fluid charge. The bulb is commonly mounted adjacent to the outlet line from the evaporator. When the temperature of the working fluid exiting the space to be cooled begins to increase, the temperature of the bulb also increases. As the pressure of the fluid inside the bulb increases it moves the diaphragm and the blocking body inside the expansion valve to increase the flow rate of working fluid to the evaporator. The increased flow of working fluid provides more cooling and eventually the temperature at the outlet of the evaporator drops. When this occurs the pressure inside the bulb falls, moving the diaphragm and the restricting body to reduce the flow rate of working fluid through the valve. The charge in the bulb is contrived to achieve a small amount of superheat in the refrigerant leaving the evaporator.

A problem with this type of prior art actuator is that the expansion device is constantly seeking the optimum rate of flow. The response time renders the expansion device unable to react promptly to changing conditions. This is particularly a problem in vehicle applications where changes in cooling loads and variations in refrigerant properties are common. As a result, the accuracy of control is also less than optimum.

Others have previously used electrically controlled expansion valves to control the flow of working fluid in a heat transfer system. These systems typically use valves that are either fully open or fully closed. The valve is periodically opened and closed for controlled time periods to achieve an overall average flow rate that is designed to handle the heat transfer load at the evaporator.

One example of a prior art electrically controlled expansion valve is shown in Patent specification US-A-4 896 860 wherein a solenoid valve is used to fully open or fully close a valve consisting of an armature sliding over a pair of cross ports formed in a center guide post. A significant problem with such pulse width modulated expansion valves is that they must open and close very frequently. This causes rapid wear of the valve components. The opening and closing action also often causes "hammering" in the system. The vibration associated with hammering may cause fatigue and premature failure of the valve and the connected tubing. It also makes accurate pressure measurement impossible.

Another example of a prior art electrically controlled expansion valve is shown in EP-A-0 147 357 wherein a stepper motor is used to control the position of a blunt edged sleeve member which slides up and down over an orifice assembly to adjust the size of the opening of a slot in the orifice assembly. This valve does not incorporate any structure to alleviate the static and dynamic pressure effects that result from the working fluid flowing past the sleeve member and through the slot.

Expansion valves that meter flow must be made to deal with the static and dynamic pressure effects created by the working fluid as it passes through the valve. In some designs efforts are made to use the pressure of working fluid to develop balancing forces. These balancing forces enable more precise movement of the restricting body or other control element. This is intended to enable more precise control of the flow rate.

The problem with attempts to design expansion valves that use such balancing forces is that the forces vary substantially with the fluid conditions and the flow rate. As a result it has been difficult to produce an expansion valve that provides accurate control of fluid flow over a wide range of operating conditions.

According to the invention there is provided a valve comprising:
a body, including an inlet port and an outlet port;
a control element positioned intermediate of said inlet port and said outlet port in said body;
said control element comprising:
a stem member, said stem member including an internal passage therethrough, said internal passage being in direct fluid communication with one of said ports of said valve; said stem member further having a generally cylindrical outer surface, said outer surface including at least one opening therethrough, said opening being in fluid communication with said internal passage;
a movable member relatively movable on the outer surface of said stem member, said movable member having a peripheral portion adjacent said opening, said movable member having an inner surface adjacent said outer surface of said stem, said movable member being movable through a range of positions between a first position wherein said peripheral portion is disposed from said opening whereby flow through said opening is enabled and a second position wherein said peripheral portion is in substantially blocking relation with said opening; and
actuator means for selectively moving said movable member of said control element in said range, whereby flow of fluid through said valve is controlled;
characterised in that said peripheral portion of said movable member is tapered to a sharp edge adjacent said inner surface.

Such a valve can accurately control the flow of working fluid therethrough and the control element can minimize the influence of flow and pressure effects.

The actuator can be a proportional solenoid actuator that accurately controls flow through the control element.

The valve can minimize vibration, have a long useful life, have few moving parts, be economical to manufacture and be readily repaired.

The valve can preferably be operated with flow in either direction.

The valve can be an expansion valve for controlling the flow of refrigerant material flowing to an evaporator of a heat transfer system, such as a vehicle air conditioning system.

In a first embodiment, the control element is configured to be a normally closed element. However in other embodiments the valve may be configured to be normally open. Since the control element is not significantly influenced by flow or pressure forces, it is thereby enabled to provide an accurate rate of flow through selective positioning of the movable member. It preferably also accommodates flow in either direction through the element.

The movable member of the control element is positioned by a proportional solenoid actuator. The proportional solenoid actuator is constructed with a low friction plunger as described in Patent Specification US-A-5 252 939. The proportional solenoid actuator also includes a novel removable coil design that facilitates repair or replacement of the actuator. The solenoid actuator can also include a novel magnetic flux circuit that includes a low permeance, non-magnetic isolation tube in series with a variable permeance element. This construction provides a proportional solenoid that achieves accurate positioning of the movable member of the control element in response to electrical signals delivered to the proportional solenoid actuator.

Accurately positioning the control element of the valve through movement of the proportional actuator, enables accurate flow control through the expansion valve and precise control of the cooling effects of the system in which the expansion valve is used.

The invention is diagrammatically illustrated by way of example in the accompanying drawings, in which:-
Figure 1 is a cross sectional view of a first embodiment of a valve according to the invention;
Figure 2 is a side view of a normally closed control element of the valve shown in Figure 1;
Figure 3 is a cross sectional side view of the control element shown in Figure 2;
Figure 4 is a side view of a normally open control element of an alternative embodiment of a valve according to the invention;
Figure 5 is a cross sectional view of the control element shown in Figure 4;
Figure 6 is a cross sectional view of a proportional solenoid actuator of the valve shown in Figure 1; and
Figure 7 is a schematic view of a heat transfer system incorporating a valve according to the invention.

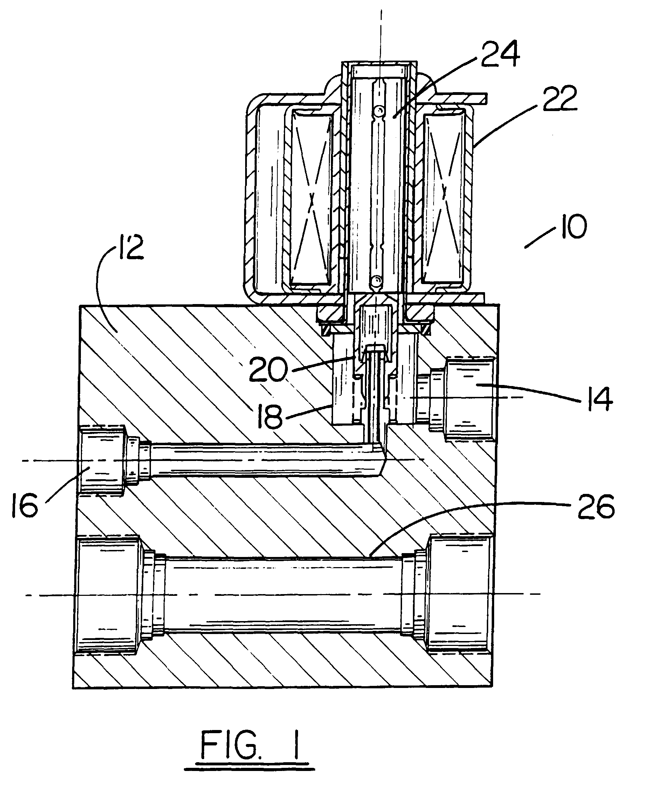

Referring now to the drawings and particularly to Figure 1, there is shown therein a first embodiment of an expansion valve generally indicated 10. The valve has a body 12. The body 12 includes an inlet 16 for receiving liquid refrigerant working fluid. The valve also has an outlet 14 for delivering expanded working fluid to an evaporator or other exothermic heat exchanger. As later explained, the expansion valve of the invention may be operated with flow in either direction, so that the inlet and outlet connections may be reversed.

The body 12 further includes a chamber 18. A control element 20 is positioned in the chamber 18. Fluid passing from the inlet 16 to the outlet 14 of the valve is required to pass through the control element 20.

The valve 10 further includes a proportional solenoid 22 which includes a movable plunger element 24. The plunger element 24 is a low friction type plunger of the type described in Patent Specification US-A-5 252 939. As later described in detail, the plunger element 24 is controlled to move downward in response to electrical signals supplied to the proportional solenoid 22.

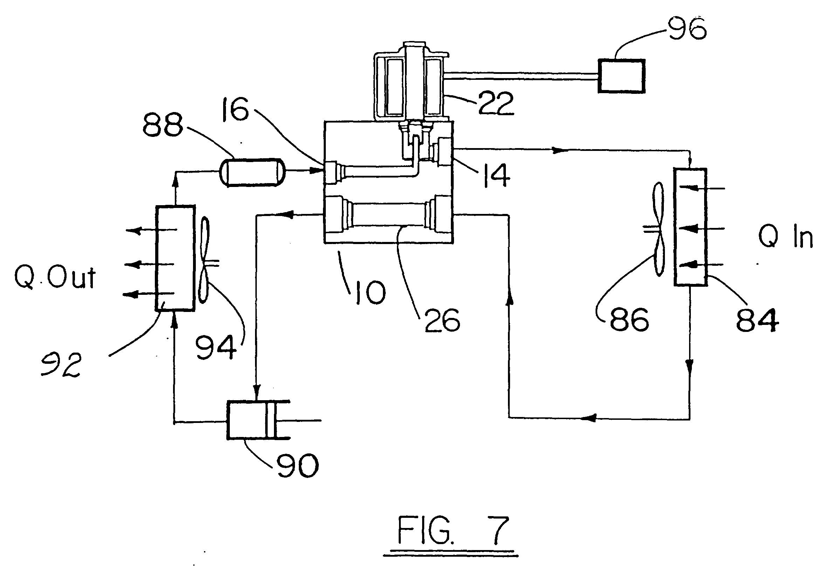

The body 12 of the valve 10 further includes a return passage 26 which provides a path for working fluid from an evaporator as it returns to a compressor and the remainder of a system (see Figure 7). The return passage 26 provide a convenient location for sensors detecting the character and properties of the refrigerant material leaving the evaporator. However, in other embodiments of the invention the expansion valve need not include a return passage through the body 12.

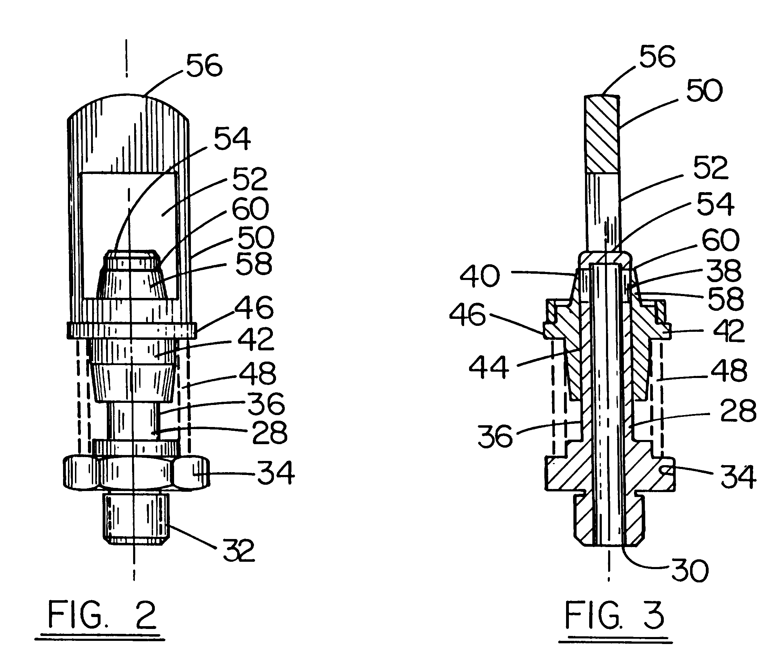

The control element 20 is shown in greater detail in figures 2 and 3 to have a stem member 28 that includes an internal passage 30. The stem member 28 has a threaded lower portion 32 for attaching to a similarly threaded opening in the body 12 (not separately shown) which is in fluid communication with the outlet 16. The stem member 28 also has a hex area 34 to facilitate installation and removal of the control element from the valve.

The stem member 28 includes a cylindrical outer surface 36. A pair of opposed longitudinally elongate openings 38 extend on outer surface 36. The openings 38 are in fluid communication with the internal passage 30 through ducts 40. The ducts 40 are similarly configured to the openings 38. The control element 20 further includes a movable member 42. The movable member 42 has a cylindrical inner surface 44 that is slightly larger in diameter than the outer surface 36 of the stem member 28. As a result, the movable member is axially movable on the stem member 28.

The movable member 42 includes an enlarged flange area 46 in abutting relation at its lower side with a compression spring 48 as shown in Figures 2 and 3. The compression spring 48 biases the movable member 42 upward as shown in the drawings.

The upper surface of the flange area 46 supports a cap portion 50 of the movable member 42. The cap portion 50 includes an open area 52 that enables it to move downward on the stem member 28 a significant distance without engaging a closed top area 54 of the stem member 28. The cap portion 50 of the movable member 42 also has a rounded plunger engaging portion 56 which engages the plunger 24 as shown in Figure 1, as the movable member is biased against the plunger by the spring 48.

The movable member 42 further includes a tapered peripheral portion 58 which is tapered as shown in Figures 2 and 3 such that it is relatively thin in the area of the openings 38 and terminates in a sharp edge 60.

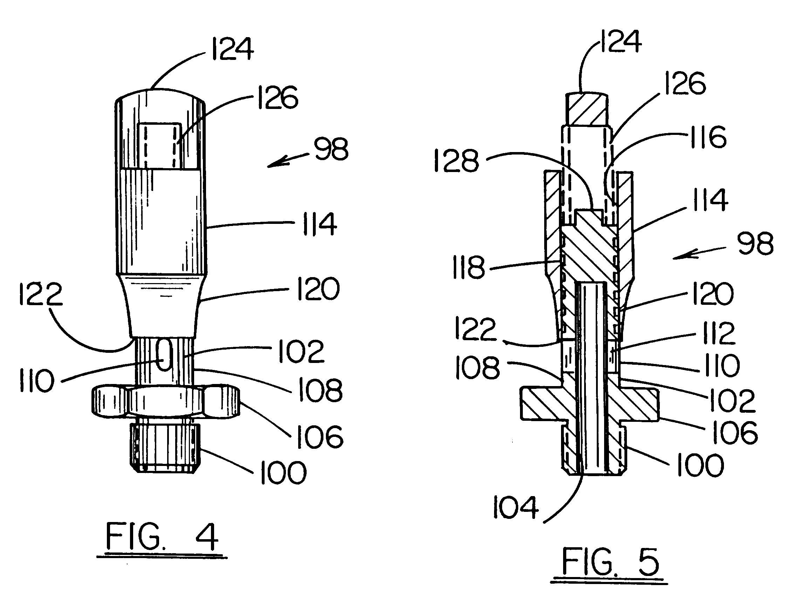

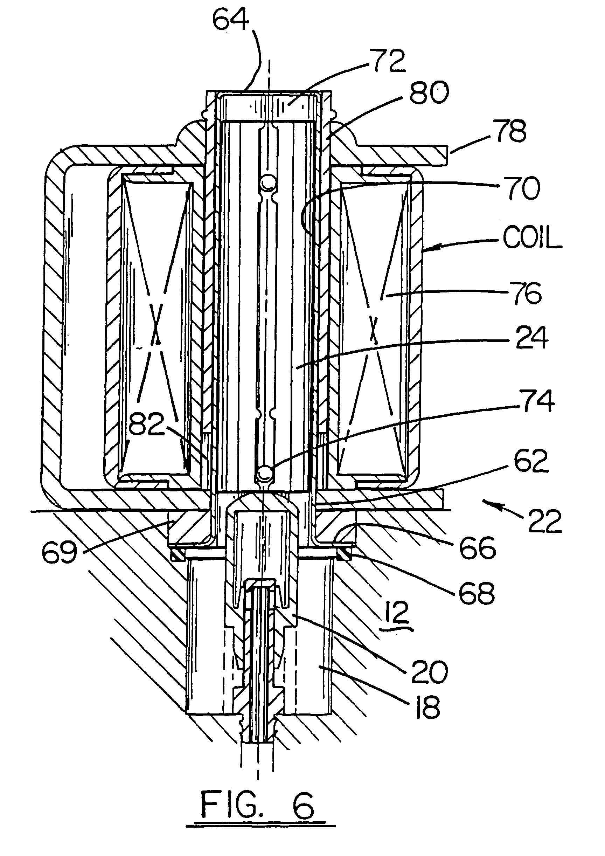

As shown in Figures 2 and 3, the spring 48 biases the movable member 42 upward, and the tapered peripheral portion 58 of the movable member covers the openings 38 in the outer surface of the stem member 28 when no downward force is applied by the plunger of the actuator. As the control element 20 is biased towards the position in which the openings 38 are covered, it is a normally closed element. As discussed later in conjunction with the description of the embodiment of the control element shown in Figures 4 and 5, other embodiments of the expansion valve of the invention may have normally open control elements.

When the movable member 42 is moved in a direction downward as shown in Figures 2 and 3, the peripheral portion 58 and the edge 60 move to uncover the openings 38 in the stem member 28. As a result, the area outside the control element 20 in the chamber 18 is in fluid communication with internal passage 30 of the control element, and the outlet 14 of the valve, through the ducts 40. The extent to which the openings 38 are uncovered determines the flow rate of refrigerant material through the control element 20, and thus the flow rate of material passing from the inlet 16 to the outlet 14 of the expansion valve 10.

The tapered peripheral portion 58 and the sharp edge 60 of the control element are important for achieving accurate flow control through the expansion valve. The sharp edge 60 minimizes the surface area of the movable member 42 that is directly exposed to the high velocity fluid stream passing out of the openings 38 in the stem. Minimizing such surface area eliminates the tendency for the fast moving fluid to exert forces on the movable member through momentum of the moving fluid or suction forces created in accordance with Bernoulli's Principles. The thin and tapered configuration of the peripheral portion 58 further minimizes such forces by reducing the surface exposed to the high velocity flow. By minimizing variable flow induced forces, the movable member 42 may be stably positioned longitudinally on the outside of the stem member 28. This is a substantial improvement over control elements which have significant surface area exposed to the high velocity flow. The larger surfaces in prior art valves are subject to being acted upon by substantial fluid momentum and velocity induced suction forces, which make the control element difficult to hold in a desired position, and thus make it difficult to accurately control flow. Further, in the preferred embodiment of the invention, forces applied by the moving fluid to the movable member are balanced out. This minimizes side loads and reduces frictional resistance to movement of the movable member on the stem. This further enables accurate flow control

In the preferred embodiment of the invention the taper of the tapered portion 58 is a maximum of about 15 degrees and the edge is less than about 0.127 mm in thickness. The stem member 28 is preferably about 3.81 mm in diameter. In the preferred embodiment the movable member 42 and the stem member 28 are made from non-magnetic stainless steel. As later explained, the non-magnetic character of the control element provides advantages in the operation of the invention. In other embodiments other non-magnetic materials such as brass, ceramics or other materials having sufficient dimensional stability and rigidity to withstand the fluid forces without deformation and which provide wear resistance, may be used.

The proportional solenoid 22 of the expansion valve is shown in greater detail in Figure 6. The proportional solenoid 22 includes an isolation tube 62 which is generally cylindrical and has a closed top 64 and a flanged bottom 66 which nests in a recess (not separately shown) in the body 12. In the preferred form of the invention the isolation tube 66 is made of non-magnetic stainless steel material having approximately 12.7 mm O.D. and a 0.305 mm thick wall. The body 12 is preferably made of non-magnetic aluminium alloy.

A resilient seal 68 is positioned under the flange bottom 66 of the isolation tube 62 and serves to provide a fluid tight seal which prevents the working fluid in the chamber 18 from escaping around the isolation tube through the recess. The isolation tube is fixed in the position shown by fastening means (not shown). A flux washer 69 made of magnetic material is positioned in the recess above the flange bottom 66 of the isolation tube. The preferred form of the flux washer is sized with an opening that accepts the isolation tube, has a 25.4 mm outside diameter and is 4.572 mm thick. The purpose of the flux washer 69 is later described in detail.

The isolation tube 62 has a cylindrical surface 70. The plunger 24 is moveable inside an internal area 72 of the isolation tube. Internal area 72 is bounded by the interior surface 70. As described in patent specification US-A-5,252,939, the plunger 24 is comprised of magnetic material and non-magnetic rollable bodies 74 roll between the isolation tube. Further, the isolation tube provides a radial gap in which there is no magnetic material between the plunger and the lower portion of the frame. This radial gap is approximately 5.08 mm. This construction enables the plunger 24 to move with virtually no frictional resistance.

The proportional solenoid 22 further includes a wound wire coil 76 for providing an electromagnetic field when electrical power is supplied thereto. The coil 76 is supported in a frame 78 made of magnetic material that is u-shaped in cross section. A cylindrical sleeve 80 extends part way through the center of the coil 76. A longitudinal gap 82 extends between the bottom of the sleeve 80 and the lower portion of the frame 78 as shown in Figure 6. In the preferred embodiment the length of this longitudinal gap is 7.62 mm.

In the preferred embodiment of the invention the inside diameter of the sleeve 80 is slightly larger than the outside diameter of the isolation tube 62. In addition, in the preferred embodiment, the frame 78 is releasably attached to the body 12 of the valve. This enables the coil and frame assembly to be removed from the valve without releasing any of the refrigerant working fluid 20 from the system. This makes it easier to repair or replace the coil of the solenoid actuator.

In operation of the expansion valve, when no electrical power is applied to the coil 76, the spring 48 of the control element 20 biases the plunger 24 upward to the position shown in Figures 1 and 6. Supplying power to the coil 76 creates an electromagnetic field. The electromagnetic field produces a flux circuit about the solenoid 22. The flux circuit extends through the sleeve 40, the frame 78 and the flux washer 69. However, the gap 82 causes magnetic saturation in the area of the gap.

The magnetic plunger functions as a member for completing the magnetic flux circuit. The flux washer 69 serves as a variable permeance element as its permeance varies with the distance the plunger 24 is displaced downward. As electrical power delivered to the coil of the solenoid actuator increases, the magnetic saturation at the gap 82 also increases. This causes the plunger to move downward until the force reaches an equilibrium with the biasing force of the spring of the control element.

By varying the amount of power delivered to the coil of the proportional solenoid, the position of the plunger and the moveable member 42 of the control element may be precisely controlled. Because the moveable member is not subject to significant flow forces as a result of fluid flowing through the valve, the rate of flow of working fluid through the valve is predictably and accurately regulated.

The force the proportional solenoid produces does not increase exponentially as the plunger approaches the end of its stroke. This enables the solenoid actuator to achieve a force versus stroke characteristic that enables precise and repeatable movement. This in combination with the element which minimizes forces from the flowing fluid provides a valve that provides flow control accuracy that was previously unattainable in expansion valves.

The solenoid 22 is further novel in that although it is a proportional solenoid, it is removable from the body of the valve. This facilitates repair or replacement. Prior art type proportional solenoids have not generally been used in expansion valves because they could not tolerate a low permeance structure between the coil sleeve and the plunger. However, positioning a low permeance non-magnetic isolation tube between the magnetic sleeve and the plunger element actually enhances the ability of the plunger to move. This is believed to occur because the low permeance element maintains the plunger away from other magnetic elements and reduces resistance to movement that occurs when a magnetic element that is attracted to the plunger is immediately adjacent thereto.

It will be understood by those skilled in the art, that although the preferred embodiment of the invention uses an air gap to achieve a saturation area, in other embodiments a non-magnetic spacer or thinned area of the sleeve may be used. Likewise, although the preferred embodiment includes a flux washer as a variable permeance element, other embodiments may use other types of elements that exhibit increasing permeance with plunger stroke.

In operation of the proportional solenoid, as greater electrical power is delivered to the coil 76, the plunger 24 moves in a downward direction as shown in Figure 1. Because the moveable member 42 is engaged with the plunger 24, it likewise moves downward. This opens flow through the openings 38 in the outer surface of the stem member 28. As a result, working fluid on the inside of the stem member flows into the chamber 28 and expands. Because the openings 38 are elongate, the further the moveable member moves downward the greater the flow through the control element.

The configuration of the control element enables precise control of the flow therethrough in response to the displacement of the moveable member. As previously discussed, the tapered peripheral portion 58 and the sharp edge 60 of the moveable member reduce to a minimum the area of the moveable member exposed to the fast moving fluid. Forces tending to cause side forces on the moveable member which are perpendicular to its direction of motion are balanced. As a result, the effects of flow and pressure are minimized.

The non-magnetic character and configuration of the flow control element provides a further advantage in the operation of the valve. It is common for magnetic particles to flow in the working fluid in the flow circuit. Such impurities may result from contamination or deterioration of system components. Such magnetic particles can become attached to the magnetic plunger and control elements comprised of magnetic material. By making the control element non-magnetic and engaging the plunger at the plunger engaging portion 56, which is far removed from the flow openings 38, such particles do not tend to collect near the openings or relatively moving parts of the control element where they could otherwise restrict flow or cause wear. This further ensures accurate control of flow and increases valve life. The configuration of the movable member with the plunger engaging surface far removed from the flow openings, provides an internal space that enables more uniform expansion within the body of the valve. This further helps to achieve uniformity of flow and accurate control.

The control element provides precise and predictable flow control in response to the power delivered to the proportional solenoid. As a result, the expansion valve of the present invention may be used to achieve ore accurate control of the cooling characteristics when used in an air conditioning or other heat transfer system.

A typical system in which the expansion valve 10 of the present invention may be used is shown schematically in Figure 7. Liquid working fluid enters the inlet 16 of the expansion valve. The expanded refrigerant leaves the outlet 14 and is delivered in a suitable conduit to an evaporator 84. The working fluid absorbs heat as indicated by the arrows labelled Q-in, as the working fluid flows through the evaporator. Of course in the preferred form of the invention, which is an air conditioning system for a vehicle, the evaporator is in the passenger compartment or other area to be cooled. A fan 86 shown schematically draws air through the evaporator to assist in heat transfer.

Working fluid exiting the evaporator travels in a suitable conduit back through the return passage 26 of the valve 10. As previously discussed, the return passage through the valve provides a suitable location for temperature and/or pressure sensors to detect the properties of the refrigerant vapor exiting the evaporator.

The vaporized working fluid is compressed by a compressor 90 and delivered in a suitable conduit to a condenser 92. In the condenser 92 the working fluid loses heat as reflected by the arrows labelled Q-out. In the condenser 92 the working fluid condenses to a liquid. A fan 94 shown schematically draws air across the condenser and aids in transferring heat from the working fluid as it passes through the condenser. In the preferred embodiment of the invention, which is an air conditioning system for a vehicle, heat is transferred from the working fluid to the environment.

From the condenser the liquefied working fluid is returned to the inlet 16 of the expansion valve, after first passing through a receiver-drier 88 which serves to remove impurities. Such receiver-driers are well known to those skilled in the art.

The proportional solenoid 22 is actuated by an electronic control module shown schematically as 96. The control module 96 includes a processor and operates to deliver signals to the solenoid to selectively control the flow rate of refrigerant through the expansion valve. The control module is further electrically connected to sensors (not shown) which detect the characteristics of the working fluid as it leaves the evaporator, and perhaps other characteristics of the system, and an operator control, which enables the control module to calculate the appropriate amount of working fluid that should optimally pass through the expansion valve and to convert this amount into a signal. Those skilled in the art may device numerous ways of sensing the parameters desired to be used to control the flow rate through the expansion valve and for the control module 96 to properly actuate the valve to provide the desired flow.

The embodiment of the valve shown in Figure 1 includes a normally closed control element 20. However other embodiments of the invention may include control elements that are normally open. Such a normally open control element 98 is shown in Figures 4 and 5. The control element 98 is designed to be a direct replacement for the control element 20, and the element 98 may be substituted in the expansion valve 10 without changes to the valve construction. However the actuation of the proportional solenoid by the control module would have to be changed to reflect the different character of the control element.

The control element 98 has a threaded lower portion 100 similar to the threaded portion 32 of valve element 20. Also like the previously described control element, the element 98 has a stem member 102 with an internal passage 104. The control element 98 also has an external hex area 106 for ease of installation ad removal.

The control element 98 further includes a cylindrical outer surface 108. A pair of openings 110 in the surface 108 are connected through ducts 112 to the internal passage 104. The openings 110 are elongate longitudinally along the axis of the stem member as shown.

The control element 98 also includes a movable member 114 which has a cylindrical inner surface 116 slightly larger in diameter than the outer surface 108. This enables the movable member to move longitudinally on the outside of the stem member. The stem member 102 also includes a plurality of ridges 118 in the area above the openings 110 as shown in Figure 5.

The movable member 114 further includes a downwardly tapered peripheral portion 120 which terminates at a sharp edge 122 adjacent its lower end. The movable member 114 further includes a plunger engaging portion 124 for engaging the plunger 24. A compression spring 126 biases the moveable member in the upward direction as shown in Figures 4 and 5. Stem member 102 further includes a detent 128 for helping to center the spring 126 in position.

In operation of an expansion valve that includes the control element 98, full flow is achieved when the movable member 114 is disposed in its fully upward position. This occurs when no power is delivered to the proportional solenoid and the plunger 24 is disposed fully upward as shown in Figure 1.

As electrical power to the coil of the solenoid is increased, the plunger moves downward and the movable member 114 moves similarly against the force of the spring 126. As the movable member partially covers the openings 110, flow through the control element is reduced. The flow is controlled by selectively moving the movable member to cover the openings to achieve the desired flow rate.

Like the control element 20, the control element 98 is not materially influenced by forces generated by the flow of the refrigerant therethrough. This is because the taper of the peripheral portion 120 and the sharp edge minimize the amount of surface area exposed to the fast moving fluid exiting from the stem. This is particularly important in the normally open configuration of the control element as fluid exiting through the openings 110 will tend to have a velocity that is both upward and outward in the orientation of the control element shown in Figure 5. The taper of the peripheral portion, which is preferably a maximum of about 15 degrees, and the sharp edge which is preferably less than about 0.127 mm, minimizes the forces imparted by fluid flow. This enables accurate and repeatable flow based on the position of the movable member by the proportional solenoid. The control element 98 is also preferably comprised of stainless steel or other relatively rigid ear resistant non-magnetic material for the reasons discussed in conjunction with the normally closed control element.

A further advantage of the construction of the control elements is that fluid may flow through the valve in either direction. This avoids the need to connect the valve with particular ports as the inlet and outlet. It is also useful in heat pump applications in which refrigerant flow is periodically reversed.

In the preferred construction of the control elements 20 and 98, a pair of opposed fluid openings in the stem member are used. These openings are elongate to achieve control through a wide range of flow rates. The opposed nature of the openings also serves to balance the forces on the movable member of the control element which facilitates accurate control. In other embodiments of the invention, other numbers of openings and other configurations of openings may be used depending on the range of flow rates desired.

## Claims

1. A valve (10) comprising:
a body (12), including an inlet port (16) and an outlet port (14);
a control element (20) positioned intermediate of said inlet port (16) and said outlet port (14) in said body (12);
said control element (20) comprising:
a stem member (28), said stem member (28) including an internal passage (30) therethrough, said internal passage (28) being in direct fluid communication with one of said ports of said valve (10); said stem member (28) further having a generally cylindrical outer surface (36), said outer surface (36) including at least one opening (38) therethrough, said opening (38) being in fluid communication with said internal passage (30);
a movable member (42) relatively movable on the outer surface (36) of said stem member (28), said movable member (42) having a peripheral portion (58) adjacent said opening (38), said movable member (42) having an inner surface (44) adjacent said outer surface (36) of said stem (28), said movable member (42) being movable through a range of positions between a first position wherein said peripheral portion (58) is disposed from said opening (38) whereby flow through said opening (38) is enabled and a second position wherein said peripheral portion (58) is in substantially blocking relation with said opening (38); and
actuator means (22) for selectively moving said movable member (42) of said control element (20) in said range, whereby flow of fluid through said valve (10) is controlled;
characterised in that said peripheral portion (58) of said movable member (42) is tapered to a sharp edge (60) adjacent said inner surface (44).

2. A valve according to claim 1 wherein said movable member (42) of said control element (20) is movable longitudinally on said stem member (28).

3. A valve according to claim 1 wherein said opening (38) or openings (38) are each in fluid communication with said internal passage (30) of said stem member (28) through a duct (40), said ducts (40) extending substantially perpendicular to said outer surface (36) of said stem element (28).

4. A valve according to claim 1 wherein said outer surface (36) of said stem member (28) is cylindrical, and wherein said inner surface (44) is slightly disposed radially from said outer surface (36) of said stem member (28).

5. A valve according to claim 1 wherein said peripheral portion (58) is tapered at a maximum angle of 15 degrees.

6. A valve according to claim 1 wherein said control element (20) further includes a spring (48) for biasing said movable member (42) to either said first position or said second position.

7. A valve according to claim 1 wherein said actuator means (22) includes a magnetic plunger (24), said plunger (24) being selectively movable in the longitudinal direction, and wherein said movable member (42) of said control element (20) is comprised of non-magnetic material and includes a plunger engaging portion (56) for engaging said plunger (24) away from said opening (38) or openings (38) in said stem member (28).

8. A valve according to claim 7 wherein said control element (20) includes a spring (48) for biasing said movable member (42) of said control element (20) to the first position, wherein said plunger (24) is movable in engagement with said movable member (42) to overcome said biasing force, and wherein said peripheral portion (58) of said movable member (42) is disposed intermediate of said opening (38) or openings (38) and said plunger (24) when said movable member (42) is in the first position.

9. A valve according to claim 7 wherein said control element (20) includes a spring (48) for biasing said movable member (42) to the second position, and wherein said plunger (24) is movable in engagement with said movable member (42) to overcome said biasing force, and said peripheral portion (58) is disposed intermediate of said plunger (24) and said opening (38) or openings (38) when said movable member (42) is in the first position.

10. A valve according to claim 8 or 9 wherein said stem member (28) has two openings (38) and two ducts (40), and wherein said openings (38) and ducts (40) are axially elongate.

11. A valve according to claim 1 wherein said peripheral portion (58) is conically tapered and said sharp edge (60) is less than 0.127 mm in radial thickness.

## Patentansprüche

1. Ventil (10), welches folgendes umfaßt:
- einen Körper (12) einschließlich eines Einlaßkanals (16) und eines Auslaßkanals (14);
- ein zwischen der Einlaßöffnung (16) und der Auslaßöffnung (14) in dem Körper (12) angeordnetes Steuerungselement (20), wobei das Steuerungselement (20) folgendes umfaßt: ein Schaftelement (28), wobei das Schaftelement (28) einen Innenkanal (30) hierdurch aufweist, der in direkter Fluidverbindung mit einem der Kanäle des Ventils (10) steht, das Schaftelement (28) ferner eine im allgemeinen zylindrische Außenfläche (36) besitzt, welche mindestens eine Öffnung (38) hierdurch aufweist, die in Fluidverbindung mit dem Innenkanal (30) steht.
- ein auf der Außenfläche (36) des Schaftelements (28) verhältnismäßig bewegliches Glied (42), wobei das bewegliche Glied (42) neben der Öffnung (38) ein peripheres Teil (58) aufweist, das bewegliche Glied (42) einen Innenfläche (44) neben der Außenfläche (36) des Schaft (28) aufweist, das bewegliche Glied (42) über einen Bereich von Positionen zwischen einer ersten Position, in der das periphere Teil (58) von der Öffnung (38) weg angeordnet ist, wodurch Durchfluß durch die Öffnung (38) möglich wird, und einer zweiten Position, in der das periphere Teil (58) in einer im wesentlichen sperrenden Beziehung zu der Öffnung (38) steht, beweglich ist, und ein
- Stellantriebmittel (22) zum wahlweisen Bewegen des beweglichen Glieds (42) des Steuerungselements (20) in dem Bereich, wodurch der Fluidfluß durch das Ventil (10) gesteuert wird;
dadurch gekennzeichnet, daß das periphere Teil (58) des beweglichen Glieds (42) sich neben der Innenfläche (44) zu einer scharfen Kante (60) verjüngt.

2. Ventil nach Anspruch 1, dadurch gekennzeichnet, daß das bewegliche Glied (42) des Steuerungselements (20) in Längsrichtung an dem Schaftelement (28) beweglich ist.

3. Ventil nach Anspruch 1, dadurch gekennzeichnet, daß die Öffnung (38) bzw. Öffnungen (38) jeweils in Fluidverbindung mit dem Innenkanal (30) des Schaftelements (28) durch einen Kanal (40) stehen, wobei sich die Kanäle (40) im wesentlichen senkrecht zu der Außenfläche (36) des Schaftelements (28) erstrecken.

4. Ventil nach Anspruch 1, dadurch gekennzeichnet, daß die Außenfläche (36) des Schaftelements (28) zylindrisch ist und daß die Innenfläche (44) von der Außenfläche (36) des Schaftelements (28) etwas radial versetzt ist.

5. Ventil nach Anspruch 1, dadurch gekennzeichnet, daß sich das periphere Teil (58) bei einem maximalen Winkel von 15 Grad verjüngt.

6. Ventil nach Anspruch 1, dadurch gekennzeichnet, daß das Steuerungselement (20) ferner eine Feder (48) zum Vorspannen des beweglichen Glieds (42) entweder in die erste Position oder in die zweite Position aufweist.

7. Ventil nach Anspruch 1, dadurch gekennzeichnet, daß das Stellantriebmittel (22) einen magnetischen Kolben (24) aufweist, wobei der Kolben (24) wahlweise in die Längsrichtung bewegbar ist, und daß das bewegliche Glied (42) des Steuerungselements (20) aus nichtmagnetischem Material besteht und ein kolbeneingreifendes Teil (56) zum Eingreifen des Kolbens (24) fern von der Öffnung (38) bzw. den Öffnungen (38) in dem Schaftelement (28) aufweist.

8. Ventil nach Anspruch 7, dadurch gekennzeichnet, daß das Steuerungselement (20) eine Feder (48) zum Vorspannen des beweglichen Glieds (42) des Steuerungselements (20) in die erste Stellung aufweist, daß der Kolben (24) im Eingriff mit dem beweglichen Glied (42) beweglich ist, um die Vorspannkraft zu überwinden, und daß das periphere Teil (58) des beweglichen Glieds (42) zwischen der Öffnung (38) bzw. den Öffnungen (38) und dem Kolben (24) angeordnet ist, wenn das bewegliche Glied (42) sich in der ersten Position befindet.

9. Ventil nach Anspruch 7, dadurch gekennzeichnet, daß das Steuerungselement (20) eine Feder (48) zum Vorspannen des beweglichen Glieds (42) in die zweite Position aufweist, und daß der Kolben (24) im Eingriff mit dem beweglichen Glied (42) beweglich ist, um die Vorspannkraft zu überwinden, und das periphere Teil (58) zwischen dem Kolben (24) und der Öffnung (38) bzw. den Öffnungen (38) angeordnet ist, wenn das bewegliche Glied (42) sich in der ersten Position befindet.

10. Ventil nach Anspruch 8 oder 9, dadurch gekennzeichnet, daß das Schaftelement (28) zwei Öffnungen (38) und zwei Kanäle (40) aufweist und die Öffnungen (38) und Kanäle (40) achsial länglich sind.

11. Ventil nach Anspruch 1, dadurch gekennzeichnet, daß das periphere Teil (58) konisch verjüngt ist und die scharfe Kante (60) eine radiale Stärke von weniger als 0,127 mm aufweist.

## Revendications

1. Soupape (10) comprenant :
- un corps (12) muni d'un orifice d'entrée (16) et d'un orifice de sortie (14) ;
- un élément de commande (20) placé dans une position intermédiaire entre l'orifice d'entrée (16) et l'orifice de sortie (14) dans le corps (12) ;
cet élément de commande (20) comprenant :
- un élément de tige (28), cet élément de tige (28) comprenant un passage intérieur (30) à travers celui-ci, ce passage intérieur (30) étant en communication de fluide directe avec l'un des orifices de la soupape (10) ; cet élément de tige (28) comportant en outre une surface extérieure généralement cylindrique (36), cette surface extérieure (36) comprenant au moins une ouverture (38) à travers celle-ci, cette ouverture (38) étant en communication de fluide avec le passage intérieur (30) ;
- un élément mobile (42) pouvant effectuer un déplacement relatif sur la surface extérieure (36) de l'élément de tige (28), cet élément mobile (42) comportant une partie périphérique (58) adjacente à l'ouverture (38), cet élément mobile (42) comportant une surface intérieure (44) adjacente à la surface extérieure (36) de la tige (28), cet élément mobile (42) pouvant se déplacer sur une plage de positions entre une première position dans laquelle la partie périphérique (58) part de l'ouverture (38) de façon que l'écoulement de fluide est capable de traverser l'ouverture (38), et une seconde position dans laquelle la partie périphérique (58) est en relation essentiellement de blocage par rapport à l'ouverture (38) ; et - des moyens d'actionnement (22) pour déplacer sélectivement l'élément mobile (42) de l'élément de commande (20) dans la plage de positions ci-dessus, de manière à commander l'écoulement de fluide à travers la soupape (10) ;
caractérisée en ce que
la partie périphérique (58) de l'élément mobile (42) va en s'amincissant jusqu'à un bord coupant (60) adjacent à la surface intérieure (44).

2. Soupape selon la revendication 1,
dans laquelle
l'élément mobile (42) de l'élément de commande (20) peut se déplacer longitudinalement sur l'élément de tige (28).

3. Soupape selon la revendication 1,
dans laquelle
l'ouverture (38) ou les ouvertures (38) sont chacune en communication de fluide avec le passage intérieur (30) de l'élément de tige (28) par l'intermédiaire d'un conduit (40), ce conduit (40) s'étendant essentiellement perpendiculairement à la surface extérieure (36) de l'élément de tige (28).

4. Soupape selon la revendication 1,
dans laquelle
la surface extérieure (36) de l'élément de tige (28) est cylindrique, et la surface intérieure (44) est disposée légèrement radialement par rapport à la surface extérieure (36) de l'élément de tige (28).

5. Soupape selon la revendication 1,
dans laquelle
la partie périphérique (58) va en s'amincissant sous un angle maximum de 15 degrés.

6. Soupape selon la revendication 1,
dans laquelle
l'élément de commande (20) comprend en outre un ressort (48) pour pousser l'élément mobile (42), soit vers la première position, soit vers la seconde position.

7. Soupape selon la revendication 1,
dans laquelle
les moyens d'actionnement (22) comprennent un plongeur magnétique (24), ce plongeur (24) pouvant se déplacer sélectivement dans la direction longitudinale, et l'élément mobile (42) de l'élément de commande (20) est constitué d'un matériau non magnétique et comprend une partie d'engagement de plongeur (56) pour engager le plongeur (24), en l'écartant de l'ouverture (38) ou des ouvertures (38), dans l'élément de tige (28).

8. Soupape selon la revendication 7,
dans laquelle
- l'élément de commande (20) comprend un ressort (48) pour pousser l'élément mobile (42) de l'élément de commande (20) vers la première position,
- le plongeur (24) peut se déplacer pour venir s'engager contre l'élément mobile (42) pour surmonter la force de poussée, et
- la partie périphérique (58) de l'élément mobile (42) est disposée dans une position intermédiaire entre l'ouverture (38) ou les ouvertures (38), et le plongeur (24), lorsque l'élément mobile (42) se trouve dans la première position.

9. Soupape selon la revendication 7,
dans laquelle
- l'élément de commande (20) comprend un ressort (48) pour pousser l'élément mobile (42) vers la seconde position, et
- le plongeur (24) peut se déplacer pour venir en contact avec l'élément mobile (42) de manière à surmonter la force de poussée, et la partie périphérique (58) est disposée dans une position intermédiaire entre le plongeur (24) et l'ouverture (38) ou les ouvertures (38) lorsque l'élément mobile (42) se trouve dans la première position.

10. Soupape selon la revendication 8 ou 9,
dans laquelle
- l'élément de tige (28) comporte deux ouvertures (38) et deux conduits (40), et
- les ouvertures (38) et les conduits (40) sont allongés axialement.

11. Soupape selon la revendication 1,
dans laquelle
la partie périphérique (58) va en s'amincissant coniquement et le bord coupant (60) présente une épaisseur radiale inférieure à 0,127 mm.
